# EUROPÄISCHE PATENTANMELDUNG

(11) **EP 1 403 422 A1**
(43) Veröffentlichungstag der Anmeldung: **31.03.2004**
(21) Anmeldenummer: 03018890.8
(22) Anmeldetag: 20.08.2003
(51) Int. Cl.: D21C 5/02

(54) **Verfahren zur Aufbereitung von Altpapier**

(30) Priorität: 25.09.2002 DE 10244521
(71) Anmelder: Voith Paper Patent GmbH, 89522 Heidenheim (DE)
(72) Erfinder: Gehr, Volker, Dr., 88255 Baienfurt (DE); Schubert, Hans-Ludwig, Dr., 88255 Baienfurt (DE)

(57) **Zusammenfassung**

Das Verfahren wird bei der Aufbereitung von mit klebenden Stoffen (Stickies) verunreinigtem Altpapier (M) angewendet, besonders dann, wenn ein hochwertiges z.B. grafisches Papier daraus erzeugt werden soll. Dabei wird zunächst wie üblich eine wässrige Faserstoffsuspension (S) erzeugt, die nach einer Vorreinigung (2) in eine Feinsortierung (3) gelangt. Bei der Feinsortierung (3) erfolgt der Abzug des Rejekts (R3) kontinuierlich, um einen besonders sauberen Gutstoff (A3) zu erhalten. Der Rejekt (R3) wird in einer Faserfraktionierung (4) in eine Kurzfaserfraktion (KF4) und in eine Langfaserfraktion (LF4) so aufgeteilt, dass die Kurzfaserfraktion (KF4) einen wesentlichen Anteil der klebenden Verunreinigungen enthält. Diese werden in mindestens einer Trennstufe (6) entfernt, während die Langfaserfraktion (LF4) in einer Mahlstufe (5) weiter bearbeitet wird.

## Beschreibung

Die Erfindung bezieht sich auf Verfahren zur Aufbereitung von Altpapier gemäß dem Oberbegriff des Anspruchs 1.

Verfahren dieser Art werden benutzt, um die Altpapierfaser-Rohstoffe so weit aufzubereiten, dass sie auch zur Herstellung von hochwertigen Papieren verwendet werden können. Dabei sind unter solchen Papieren insbesondere sogenannte SC- und LWC-Papiere zu verstehen. In der Regel werden diese Sorten als grafische Papiere eingesetzt, bei denen bekanntlich die Qualitätsanforderungen besonders hoch sind. Damit sind insbesondere Weiße, Sauberkeit, Festigkeiten und Oberflächengüte des hergestellten Papiers gemeint.

Da bekanntlich die Bestrebung besteht, auch bei hochwertigen Papiersorten Altpapier, welches in der Regel mit schwer auszuscheidenden Störstoffen vermischt ist, einzusetzen, ist dieses Problem nicht immer leicht zu lösen. Besonders Farbpartikel und klebende Teilchen (Stickies) müssen mit teilweise aufwendigen Verfahrensschritten entfernt werden.

Aus der EP 1 138 820 A1 ist ein Verfahren bekannt, das zur wirksamen Ausscheidung von feinen Stickies aus einer Altpapiersuspension dient. Es arbeitet mit der Kombination einer Feinfraktionierung mit anschließender Flotation.

Um bei Einsatz von Altpapier eine gute Papier-Oberflächenqualität zu erzielen, ist es meist erforderlich, durch eine Mahlung den Faserstoff so weit zu zerkleinern, dass ein sauberes dünnes Blatt mit guter Bedruckbarkeit daraus gebildet werden kann. Hierbei geht oft ein großer Teil des Festigkeitspotentials der Fasern verloren.

Der Erfindung liegt daher die Aufgabe zu Grunde, ein faserschonendes, kostengünstiges Verfahren zur Aufbereitung von Altpapier zu schaffen, mit dem ein Papierfaserstoff erzeugt werden kann, der den erwähnten Anforderungen genügt. Insbesondere die klebenden Verunreinigungen sollen weitestgehend ausgeschieden werden.

Diese Aufgabe wird durch die im Kennzeichen des Anspruchs 1 genannten Merkmale gelöst.

Durch das beschriebene Verfahren wird eine besonders effektive Abscheidung feiner und feinster Störstoffe erzielt. Das Verfahren ist zudem wirtschaftlich, da die Abscheidung von Störstoffen mit einer anschließenden Faserfraktionierung verbunden ist. Diese Faserfraktionierung klassiert noch vorhandene weitere Störstoffe, was bei der Weiterbehandlung besonders günstig genutzt wird.

Die Erfindung und ihre Vorteile werden erläutert an Hand von Zeichnungen. Dabei zeigen:
- Fig. 1: ein Schema zur Durchführung des erfindungsgemäßen Verfahrens;
- Fig. 2 und 3: schematisch: Zwei weitere Möglichkeiten zur Behandlung der bei der Faserfraktionierung gebildeten Stoffströme.

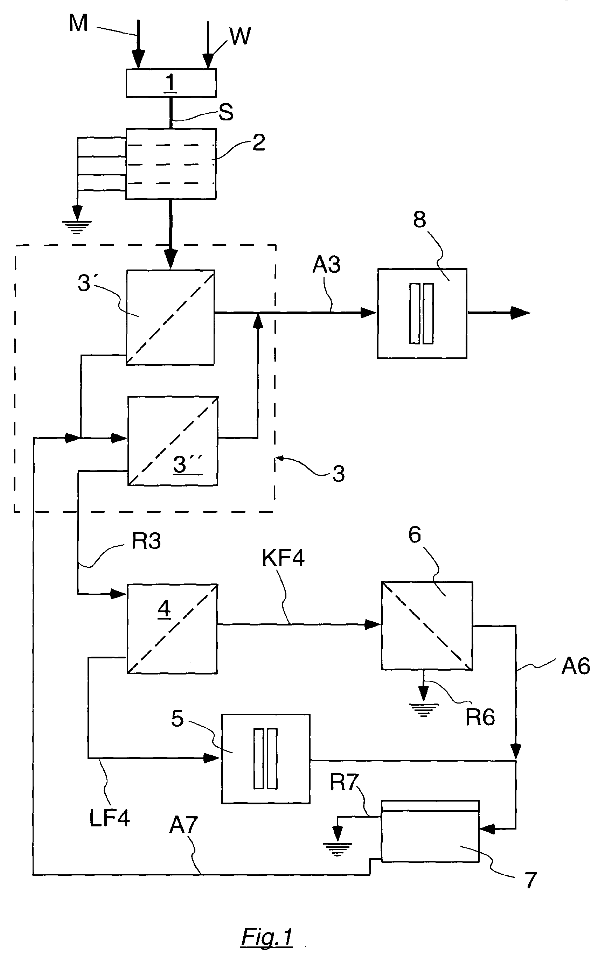

Das in der Fig. 1 gezeigte Verfahrensschema stellt die wesentlichen Verfahrensschritte der Erfindung an Hand eines Beispiels dar. Zunächst erfolgt die Stofflösung 1, bei der das verunreinigte Altpapier M zusammen mit Wasser W so behandelt wird, dass sich eine wässrige Faserstoffsuspension S bildet. Meistens ist anschließend eine mehr oder weniger aufwendige Reinigung 2 der Faserstoffsuspension S notwendig, da diese anschließend ströungsfrei in einer Feinsortierung verarbeitet werden soll. Welcher Aufwand zur Herstellung eines vorgereinigten Papierstoffes erforderlich ist, ist an sich bekannt. In Fällen, in denen bedrucktes Altpapier eingesetzt wird, kann die Reinigung 2 auch Deinkingstufen enthalten.

In der sich anschließenden Feinsortierung 3 werden Gutstoff A3 und Rejekt R3 gebildet. Nasssiebe in der Feinsortierung sind in der Regel mit Schlitzen versehen, deren Weite zwischen 0,1 und 0,3 mm beträgt, vorzugsweise nahe bei 0,1 mm. Für die Bildung eines relativ sauberen Gutstoffes A3 ist es außerdem von Vorteil, die Nasssiebung so zu steuern, dass der Überlaufanteil relativ hoch ist, z.B. mindestens 25 %, vorzugsweise 40 bis 50 % des Zulaufes, was bei mehrstufiger Sortierung für jede Stufe extra gilt.
Der so gewonnene Gutstoff A3 kann weiter verarbeitet und weiteren Prozessstufen zugeführt werden. Als Beispiel wird hier eine Dispergierung 8 gezeigt.

Die Feinsortierung 3 enthält hier zwei Stufen 3' und 3", deren Durchläufe zum Gutstoff A3 zusammengefasst werden. Der Überlauf der ersten Stufe 3' bildet den Zulauf der zweiten Stufe 3 ". Deren Überlauf bildet den Rejekt R3.

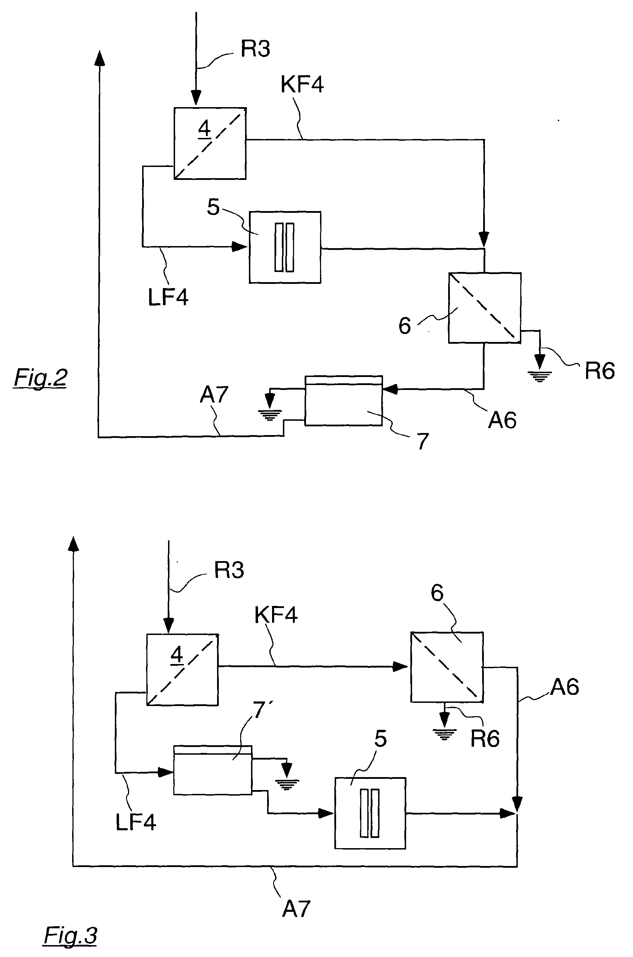

Die sich anschließende Faserfraktionierung 4 dient dazu, aus dem Rejekt R3 eine Kurzfaserfraktion KF4 und eine Langfaserfraktion LF4 zu bilden. Ein übliches Verfahren zur Labormessung des Faserfraktionierungseffektes ist die Zurückhaltung am R14-Sieb (Bauer-MacNett) oder eine quantitative Auswertung einer optischen Faserlängenanalyse. Es ist anzustreben, für die in der Faserfraktionierung 4 gewonnene Langfaserfraktion LF4 einen möglichst hohen Wert zu erzielen. Dabei werden die relativ feinen klebenden Verunreinigungen (Stickies) bevorzugt in der Kurzfaserfraktion KF4 angereichert. Sie können dann in einer Trennstufe 6, die entweder als Nasssiebung arbeitet oder mit hochwirksamen Hydrozyklonen ausgestaltet ist, als Rejekt R6 entfernt werden. Wie Fig. 2 zeigt, kann die Trennstufe 6 auch so geschaltet sein, dass sie einen Stoffstrom verarbeitet, der neben der Kurzfaserfraktion KF4 auch die gemahlene Langfaserfraktion LF4 enthält. Ob dann noch z.B. eine Flotation 7 oder weitere Nasssiebungen oder Hydrozyklone erforderlich sind, hängt von den Verhältnissen, insbesondere von Rohstoff oder Produkt, ab.

Um die Faserfraktionierung 4 durchzuführen, sind Apparate mit Nasssieben besonders geeignet. Vorteilhafterweise sind diese Nasssiebe mit Löchern versehen, die einen Durchmesser zwischen 0,5 und 2,5 mm haben. Es ist auch günstig, solche Siebapparate mit einer möglichst kleinen Druckdifferenz zu betreiben, weil dann die Strömungsgeschwindigkeit in den Sieböffnungen relativ gering ist. Auf diese Weise werden Langfasern und besonders steife Fasern besonders gut daran gehindert, die Sieböffnungen zu passieren. Dagegen können feine, klebende Verunreinigungen (Stickies) ohne weiteres in den Durchlauf, also in die Kurzfaserfraktion KF4 gelangen. Die sich anschließende Trennstufe 6 ist besonders für die Abscheidung solcher Verunreinigungen ausgelegt.

Für Fraktionierverfahren besonders geeignet ist ein geschlossener Apparat zur Nasssiebung von der Art eines Drucksortierers. Dazu ist der DE 199 13 515 A1 ein speziell ausgestaltetes Schlitzsieb für einen solchen Fraktionator entnehmbar. Aber auch mit hochwirksamen Hydrozyklonen, sogenannten Cleanern, ist es möglich, eine Faserfraktionierung vorzunehmen.

Die Langfaserfraktion LF4 wird gemahlen, wozu eine Mahlstufe 5 vorgesehen ist, z.B. in Form eines Mahlrefiners, der mit einer Konsistenz von 3 bis 8% betrieben wird. Hier werden die langen Fasern so behandelt, dass sie für hochwertiges Papier besonders geeignet sind. Dazu ist es oft erwünscht, die Fasern zu kürzen und/oder zu fibrillieren und/oder in ihrer Dicke zu reduzieren. Diese Wirkung wird in einem Messerrefiner und besonders dann erreicht, wenn die Konsistenz der Suspension bei ca. 4 % liegt, wenn der Messerwinkel klein oder gleich 0 ist und wenn eine relativ hohe spezifische Kantenbelastung (gemessen z.B. in Ws/km) eingestellt wird. Größenordnungsmäßig sollten hier ca. 1000 - 3000 Ws/km aufgebracht werden. Ein Vorteil des Verfahrens liegt darin, dass diese kürzende und/oder fibrillierende Mahlung nur bei einem Teil der eingesetzten Fasern durchgeführt wird und dass die meisten schwer sortierbaren klebenden Verunreinigungen an der Mahlstufe 5 vorbeigeführt werden. Der gemahlene Faserstoff wird mit dem Gutstoff A6 der Trennstufe 6 vermischt und dann in die Feinsortierung 3 zurückgeführt.

Die Möglichkeit, aus einer Faserstoffsuspension klebende Verunreinigungen (Stickies) auszuscheiden, hängt in vielen Fällen davon ab, in welcher Größe diese vorliegen. Auch eine hochwirksame Nasssiebung kann nicht alle Stickies entfernen, wenn diese zu klein sind. Ähnliches gilt für eine Cleaneranlage. Dieses Problem kann allerdings bei Cleanern durch Zugabe von Talkum, welches die spezifische Dichte der Stickies erhöht, beseitigt oder zumindest reduziert werden. Eine Möglichkeit, auch sehr kleine Stickies effektiv zu entfernen, ist bekanntlich die Flotation, eventuell ebenfalls mit Talkumzugabe, um die Wirkung noch zu verbessern. In Fig. 1 ist eine Flotation 7 eingezeichnet, die den Gutstoff A6 der Trennstufe 6 zusammen mit dem aus der Mahlstufe 5 kommenden Stoffstrom flotiert. Dabei wird der Rejekt R7 gebildet und der Gutstoff A7. Wenn es als nachteilig angesehen wird, die Stickies erst nach der Mahlstufe auszusortieren, kann auch eine Flotation 7' vor der Mahlstufe 5 eingerichtet werden. Dann wird also die Langfaserfraktion LF4 in einer apparativ entsprechend kleiner auszuführenden Flotation 7' behandelt.

## Patentansprüche

1. Verfahren zur Aufbereitung von mit klebenden Stoffen verunreinigtem Altpapier (M) zu einer zur Erzeugung hochwertiger Papiere besonders geeigneten Faserstoffsuspension mit folgenden Schritten:
a) Herstellung einer wässrigen Faserstoffsuspension (S) aus dem Altpapier (M);
b) Vorreinigung (2) der Faserstoffsuspension (S), sofern sie gröbere Verunreinigungen enthält;
c) Feinsortierung (3) der Faserstoffsuspension (S) durch Nasssiebung mit kontinuierlichem Abzug eines Rejektes (R3) zur Bildung eines relativ sauberen Gutstoffes (A3);
**dadurch gekennzeichnet**,
d) dass der Rejekt (R3) der Feinsortierung (3) in einer Faserfraktionierung (4) so aufgeteilt wird, dass eine Kurzfaserfraktion (KF4) und eine Langfaserfraktion (LF4) entsteht,
e) dass in der Kurzfaserfraktion (KF4) Kurzfasern und klebende Verunreinigungen angereichert werden,
f) dass die klebenden Verunreinigungen aus der Kurzfaserfraktion (KF4) in mindestens einer Trennstufe (6) entfernt werden und
g) dass die Langfaserfraktion (LF4) mindestens einer Mahlstufe (5) zugeführt wird.

2. Verfahren nach Anspruch 1,
**dadurch gekennzeichnet,**
**dass** der überwiegende Teil der im Rejekt (R3) der Feinsortierung (3) enthaltenen klebenden Verunreinigungen in die Kurzfaserfraktion (KF4) geführt wird.

3. Verfahren nach Anspruch 1 oder 2,
**dadurch gekennzeichnet,**
**dass** die Feinsortierung (3) mit Hilfe von Drucksortierern in mehreren Stufen (3', 3") durchgeführt wird, wobei der Rejekt der vorigen Stufe (3') in den Zulauf der nächsten Stufe (3") geleitet wird.

4. Verfahren nach Anspruch 2 oder 3,
**dadurch gekennzeichnet,**
**dass** die Gutstoffe der Stufen (3', 3") vorwärts geführt werden.

5. Verfahren nach Anspruch 3 oder 4,
**dadurch gekennzeichnet,**
**dass** die Überläufe der Stufen (3', 3") auf mindestens 25 % des jeweiligen Zulaufes eingestellt werden.

6. Verfahren nach Anspruch 3, 4 oder 5,
**dadurch gekennzeichnet,**
**dass** der Überlauf, der nicht zur ersten Stufe (3') gehört, auf mindestens 35 % des jeweiligen Zulaufes eingestellt wird.

7. Verfahren nach einem der voranstehenden Ansprüche,
**dadurch gekennzeichnet,**
**dass** die Feinsortierung (3) an Schlitzen durchgeführt wird, die Weiten zwischen 0,08 und 0,3 mm aufweisen.

8. Verfahren nach einem der voranstehenden Ansprüche,
**dadurch gekennzeichnet,**
**dass** bei der Faserfraktionierung (4) runde oder ovale Sortieröffnungen eingesetzt werden.

9. Verfahren nach Anspruch 8,
**dadurch gekennzeichnet,**
**dass** die Sortieröffnungen einen Durchmesser haben, der zwischen 0,5 und 2,5 mm liegt.

10. Verfahren nach einem der voranstehenden Ansprüche,
**dadurch gekennzeichnet,**
**dass** die Aufteilung der Faserfraktionierung (4) hälftig mit einer Toleranz von ± 15 % vorgenommen wird.

11. Verfahren nach einem der voranstehenden Ansprüche,
**dadurch gekennzeichnet,**
**dass** die Langfaserfraktion (LF4) in der Mahlstufe (5) in einem Mahlrefiner bei 3 bis 6 % Feststoffgehalt gemahlen wird

12. Verfahren nach Anspruch 11,
**dadurch gekennzeichnet,**
**dass** die Mahlung in einem Refiner erfolgt, der mit Messergarnituren ausgestattet ist, deren Schnittwinkel höchstens 60° beträgt.

13. Verfahren nach Anspruch 12,
**dadurch gekennzeichnet,**
**dass** die Mahlung in einem Refiner erfolgt, der mit Messergarnituren ausgestattet ist, deren Schnittwinkel höchstens 20° beträgt.

14. Verfahren nach Anspruch 12 oder 13,
**dadurch gekennzeichnet,**
**dass** bei der Mahlung eine sekundliche Kantenbelastung von mindestens 500 Ws/km eingestellt wird.

15. Verfahren nach Anspruch 14,
**dadurch gekennzeichnet,**
**dass** bei der Mahlung eine sekundliche Kantenbelastung von mindestens 1000 Ws/km eingestellt wird.

16. Verfahren nach Anspruch 15,
**dadurch gekennzeichnet,**
**dass** in der Mahlstufe (5) eine rein spezifische Mahlarbeit von mindestens 50 kWh/t übertragen wird.

17. Verfahren nach einem der voranstehenden Ansprüche,
**dadurch gekennzeichnet,**
**dass** die Trennstufe (6) als Nasssiebung betrieben wird mit einem Schlitzsieb, dessen Schlitze eine Weite von 0,08 bis 0,25 mm haben.

18. Verfahren nach einem der Ansprüche 1 bis 16,
**dadurch gekennzeichnet,**
**dass** in der Trennstufe (6) Hydrozyklone verwendet werden.

19. Verfahren nach einem der voranstehenden Ansprüche,
**dadurch gekennzeichnet,**
**dass** die Faserstoffsuspension nach der Mahlstufe (5) mit dem Gutstoff (A6) der Trennstufe (6) zusammengeführt wird.

20. Verfahren nach Anspruch 19,
**dadurch gekennzeichnet,**
**dass** die zusammengeführten Stoffströme in den Zulauf zur letzten oder einzigen Stufe der Feinsortierung (3) zurückgeführt werden.

21. Verfahren nach Anspruch 19 oder 20,
**dadurch gekennzeichnet,**
**dass** vor dem Einlauf in die Faserfraktionierung (4) eine Flotation (7) zur Entfernung klebender Verunreinigungen durchgeführt wird.

22. Verfahren nach Anspruch 19 oder 20,
**dadurch gekennzeichnet,**
**dass** aus der Langfaserfraktion (LF4) vor der Mahlstufe (5) klebende Verunreinigungen durch eine Flotation (7') entfernt werden.
